## Europäisches Patentamt
## European Patent Office
## Office européen des brevets

(19)

(11) Veröffentlichungsnummer: **0 290 448**

**B1**

(12) ## EUROPÄISCHE PATENTSCHRIFT

(45) Veröffentlichungstag der Patentschrift:
**23.08.89**

(51) Int. Cl.⁴: **B 62 D 5/08,** F 16 F 1/14

(21) Anmeldenummer: **87900810.0**

(22) Anmeldetag: **15.01.87**

(86) Internationale Anmeldenummer:
**PCT/EP 87/00016**

(87) Internationale Veröffentlichungsnummer:
**WO 87/04678 (13.08.87 Gazette 87/18)**

(54) **LENKVENTIL FÜR FAHRZEUGE.**

(30) Priorität: **01.02.86 PCT/EP86/00054**

(43) Veröffentlichungstag der Anmeldung:
**17.11.88 Patentblatt 88/46**

(45) Bekanntmachung des Hinweises auf die Patenterteilung:
**23.08.89 Patentblatt 89/34**

(84) Benannte Vertragsstaaten:
**DE FR GB IT SE**

(56) Entgegenhaltungen:
**EP-A-0 032 345**
**DE-A-2 739 405**
**FR-A-1 223 845**
**FR-A-2 380 932**
**FR-A-2 437 968**
**GB-A-2 081 194**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **RIEGER, Wolfgang, Feldhofstr. 35, D-7322 Donzdorf 2 (DE)**
Erfinder: **BREITWEG, Werner, Lauchhofstr. 7, D-7070 Schwäbisch Gmünd (DE)**

(74) Vertreter: **Raue, Reimund, Zahnradfabrik Friedrichshafen AG Löwentaler Strasse 100 Postfach 2520, D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft ein Lenkventil in Drehschieberbauweise für Fahrzeuge mit einem mit einer Lenksäule verbundenen, durch einen Drehschieber gebildeten Eingangsteil, das mit einem durch eine mit einem Ritzel oder einer Schnecke als Abtriebswelle verbundene Steuerbuchse gebildeten Ausgangsteil über einen Drehstab in Umfangsrichtung zwischen Anschlägen verdrehbar verbunden ist, wobei der Drehstab einen mittleren Torsionsbereich mit reduziertem Querschnitt aufweist und an seinen beiden Enden mit Verbindungsteilen zur Verbindung mit dem Eingangs- bzw. Ausgangsteil versehen ist, wobei sich an den Torsionsbereich Stützteile anschließen, auf deren Außenumfang das jeweilige Verbindungsteil befestigt ist, und wobei die Steuerbuchse den Drehschieber umgibt und an der Steuerbuchse und dem Drehschieber Steuerkanten und Steuernuten zur Verteilung einer Hydraulikflüssigkeit für die Lenkkraftverstärkung angeordnet sind.

Ein solches Lenkventil ist bekannt aus der EP-A-0 032 345. Hauptbestimmend für die Baulänge des Lenkventils ist die freie Torsionslänge des Drehstabes. Wesentlich mitbestimmend für die Baulänge ist die Tatsache, daß sich an den Steuerbereich des Drehschiebers beidseitig eine Lagerstelle für den Drehschieber anschließt.

Der vorliegenden Erfindung liegt daher die Aufgabe zugrunde, ein Lenkventil mit einem Drehstab der eingangs erwähnten Art zu schaffen, bei dem trotz Beibehaltung einer bestimmten Torsionslänge eine kürzere Ventil-Bauweise erreicht wird.

Erfindungsgemäß wird diese Aufgabe dadurch gelöst, daß das dem Ausgangsteil zugewandte Verbindungsstück ein Stützlager für den Drehschieber bildet.

Durch diese erfindungsgemäße Lösung läßt sich eine deutliche Baulängenreduzierung erreichen. Besonders günstig ist es, wenn das Verbindungsteil von dem Stützteil aus mit einem Lagerteil nach innen in Richtung auf den Torsionsbereich ragt, wobei sich der Drehschieber auf dem Lagerteil abstützt. In diesem Falle liegt das Lagerteil mit geringem Abstand über dem Torsionsbereich bzw. die Innenwand des Lagerteiles verläuft in geringem Abstand über dem Torsionsbereich.

Durch diese Ausgestaltung wird die Lagerung des Drehschiebers weiter nach innen verlegt. Außerdem kann das Lagerteil optimal bezüglich seines Werkstoffes ohne Rücksicht auf den Drehstabwerkstoff und dessen Gefügezustand ausgebildet werden.

Das Lagerteil kann dabei eine beliebige Gestalt aufweisen. In einfacher Weise wird man es als Buchse ausbilden, die den Drehstab mit Abstand umgibt.

Die erfindungsgemäße Ausführung mit einem nach innen gezogenen Lagerteil ermöglicht noch eine weitere sehr vorteilhafte Verbesserung der Drehschieberlenkung. Bekanntlich treten beim Anlenken des Lenkventils bzw. Ansteuern des Servodruckes im Lenkventil mitunter störende Strömungsgeräusche auf. Zu dessen Vermeidung wurden schon verschiedene Lösungsmöglichkeiten vorgeschlagen, die alle mehr oder weniger aufwendig waren. Bekannt ist nun, daß durch einen stufenweisen Abbau des Druckes eine Geräuchreduzierung erreicht wird. Aus diesem Grunde sind in den Rücklaufleitungen zusätzliche Drosselstellen eingebaut.

Wenn man nun das Lagerteil nach innen bis mindestens zu den wenigstens annähernd radial nach innen führenden Rücklaufbohrungen des Drehschiebers verlängert und zwischen der Rücklaufbohrung am Innenumfang des Drehschiebers und dem Lagerteil eine Drosselstelle bildet, wird ohne nennenswerten Aufwand eine zweistufige Druckreduzierung und damit die Vermeidung von Strömungsgeräuschen erreicht. Je nach Ausgestaltung der Drosselstelle kann das Lagerteil auch über die Rücklaufbohrungen hinaus verlängert werden.

Die Drosselstelle kann dabei auf beliebige Weise ausgebildet sein. So kann sie z. B. zwischen dem Außenumfang des Lagerteiles und dem Innenumfang des Drehschiebers in Form eines über dem Umfang im Querschnitt veränderlichen Drosselspaltes gebildet sein oder in der Umfangswand des Lagerteiles ist im Bereich der Rücklaufbohrung eine Drosselbohrung angeordnet. Auf diese Weise fließt das Druckmittel im Inneren des Lagerteiles zwischen seiner Innenumfangswand und dem Drehstab zu einer Auslaßbohrung.

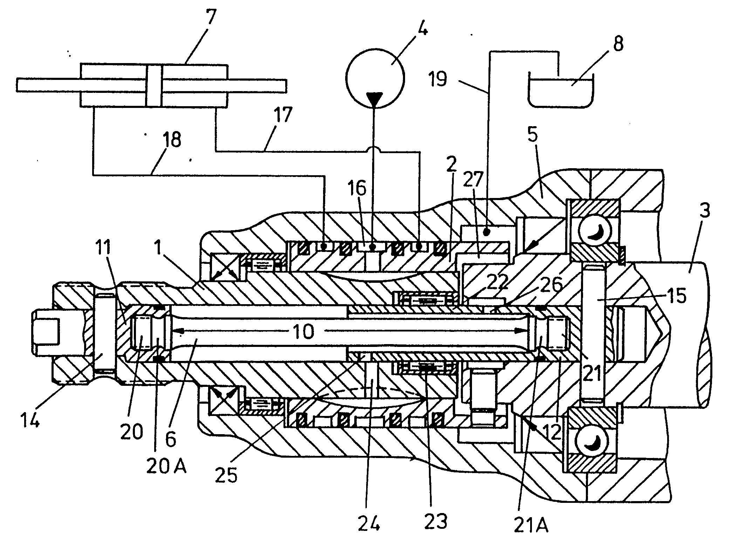

Nachfolgend ist ein Ausführungsbeispiel der Erfindung anhand der Zeichnung prinzipmäßig beschrieben. Die Zeichnung zeigt einen Längsschnitt durch ein Lenkventil in Drehschieberbauweise.

Lenkventile der in dem Ausführungsbeispiel dargestellten Art sind in ihrem Aufbau grundsätzlich bekannt, weshalb sie nachfolgend nur kurz beschrieben werden.

Das Drehschieberlenkventil weist einen Drehschieber 1, eine den Drehschieber umgebende Steuerbuchse 2 und eine Abtriebswelle 3 auf, die z. B. mit einem Ritzel versehen sein kann, welches mit einer Zahnstange zusammenarbeitet. Ein von einer Pumpe 4 aus geförderter Druckmittelstrom, im allgemeinen Öl, wird in ein die genannten Teile umgebendes Ventilgehäuse 5 in eine Ringnut 16 eingeleitet. Von der Ringnut 16 aus erfolgt die Verteilung des Ölstromes nach der Lage der Steuernuten, Steuerkanten und Steuerbohrungen in dem Drehschieber 1 und der Steuerbuchse 2 entsprechend in Hydraulikleitungen 17 und 18, die zu einem Arbeitszylinder 7 führen. Für den Rücklauf des Öles dient eine Rücklaufleitung 19 die zu einem Tank 8 führt.

Den Kern dieses Lenkventils bildet ein Drehstab 6 mit einem freien Torsionsbereich 10, dessen Länge in der Zeichnung durch die beiden Pfeile angegeben ist.

An den Torsionsbereich schließt sich an beiden Seiten jeweils ein Stützteil 20 und 21 an. Die beiden Stützteile 20 und 21 sind in ihrer Länge relativ kurz gehalten und besitzen im allgemeinen einen Durchmesser, der geringfügig größer ist als der Durchmesser des Drehstabes im Torsionsbereich 10. Die beiden Stützteile 20 und 21 haben dieselbe Festigkeit wie der Drehstab im Torsionsbereich und sind auf ihrer Außenfläche profiliert. Auf diese Außenfläche ist jeweils ein Verbindungsteil 11 bzw. 12 aufgeschoben. Durch z. B. Rundkneten, Hämmern oder dgl. kann für eine feste Verbindung mit der profilierten Außenfläche jedes Stützteiles 20 bzw. 21 gesorgt werden. Eine jeweils im Bereich der Stützteile 20 bzw. 21 an ihrer Außenfläche angebrachte ringförmige Nut 20A bzw. 21A dient dazu, die Verbindungsteile 11 und 12 zusätzlich gegen axiale Verschiebung auf dem Drehstab 6 zu sichern.

Beide Verbindungsteile 11 und 12 werden jeweils in montiertem Zustand mit einer Querbohrung versehen, in die Stifte 14 bzw. 15 eingesetzt sind, über welche eine formschlüssige Verbindung mit dem Drehschieber 1 bzw. der Abtriebwelle 3 erreicht wird.

Das Verbindungsteil 11 befindet sich auf der Eingangsseite und stellt gleichzeitig Teil einer Lenkspindel dar oder wird mit dem unteren Ende einer Lenkspindel verbunden.

Das Verbindungsteil 12 dient gleichzeitig zur Lagerung des Drehschiebers 1 auf dieser Seite. Hierzu weist es ein Lagerteil 22 als Stützlager für den Drehschieber 1 auf. Das Lagerteil 22 ist - wie aus der Zeichnung ersichtlich - von dem Verbindungsteil 12 aus nach innen in Richtung auf den Torsionsbereich 10 verlängert. Das Lagerteil weist die Form einer Buchse auf, die den Drehstab mit Abstand umgibt. Im vorderen Bereich des Lagerteiles 22 bildet ein Nadellager 23 das Lager zwischen dem Drehschieber 1 und dem Lagerteil 22. Selbstverständlich kann jedoch an dieser Stelle auch ein anderes Lager, z. B. ein Gleitlager verwendet werden.

Wenn das Lagerteil 22 noch weiter nach innen über die durch den Drehschieber 1 nach innen führenden Rücklaufbohrung 24 hinaus verlängert ist, so kann zwischen der Innenwand des Drehschiebers 1 und dem Lagerteil 22 eine Drosselstelle gebildet werden. Wie dargestellt befindet sich im Bereich der Rücklaufbohrung 24 in dem Lagerteil 22 ebenfalls eine Bohrung, die als Drosselbohrung 25 ausgebildet ist. Auf diese Weise ergibt sich ein zweistufiger Abbau des Druckes von der Hochdruckseite zu der Niederdruckseite. Der Rücklauf des Öles durch den Spalt zwischen der Innenwand des Lagerteiles 22 und dem Drehstab 6 bis zu der Rücklaufleitung 19 kann auf beliebige Weise erfolgen und ist hier lediglich durch eine Rücklaufbohrung 26 und einen Ringraum 27 dargestellt.

Zur Sicherung gegen Drehstabbrüche und als Wegbegrenzung dienen dabei Anschläge, welche in der Zeichnung nicht näher dargestellt sind, zwischen denen jeweils eine Verdrehung zwischen Eingangsteil und Ausgangsteil stattfinden kann.

## Patentansprüche

1. Lenkventil in Drehschieberbauweise für Fahrzeuge mit einem mit einer Lenksäule verbundenen, durch einen Drehschieber (1) gebildeten Eingangsteil, das mit einem durch ein Ritzel oder einer Schnecke als Abtriebswelle (3) verbundene Steuerbuchse (2) gebildeten Ausgangsteil über einen Drehstab (6) in Umfangsrichtung zwischen Anschlägen verdrehbar verbunden ist, wobei der Drehstab (6) einen mittleren Torsionsbereich (10) mit reduziertem Querschnitt aufweist und an seinen beiden Enden mit Verbindungsteilen (11, 12) zur Verbindung mit dem Eingangs- bzw. Ausgangsteil versehen ist, wobei sich an den Torsionsbereich (10) Stützteile (20, 21) anschließen, auf deren Außenumfang das jeweilige Verbindungsteil (11, 12) befestigt ist, und wobei die Steuerbuchse (2) den Drehschieber (1) umgibt und an der Steuerbuchse (2) und dem Drehschieber (1) Steuerkanten und Steuernuten zur Verteilung einer Hydraulikflüssigkeit für die Lenkkraftverstärkung angeordnet sind, dadurch gekennzeichnet, daß das dem Ausgangsteil zugewandte Verbindungsteil (12) ein Stützlager (22) für den Drehschieber (1) bildet.

2. Lenkventil nach Anspruch 1, dadurch gekennzeichnet, daß das Verbindungsteil (12) von dem Stützteil (21) aus mit einem Lagerteil (22) innen in Richtung auf den Torsionsbereich (10) ragt und daß der Drehschieber (1) auf dem Lagerteil (22) abstützt.

3. Lenkventil nach Anspruch 2, dadurch gekennzeichnet, daß das Lagerteil Buchse den Drehstab (6) mit Abstand umgibt.

4. Lenkventil nach Anspruch 3, dadurch gekennzeichnet, daß das Lagerteil (22) nach innen bis mindestens zu den wenigstens annähernd radial nach innen führenden Rücklaufbohrungen (24) verlängert ist und daß zwischen der Rücklaufbohrung (24) am Innenumfang des Drehschiebers (1) und dem Lagerteil (22) eine Drosselstelle (25) gebildet ist.

5. Lenkventil nach Anspruch 4, dadurch gekennzeichnet, daß zwischen der Öffnung der Rücklaufbohrung (24) am Innenumfang des Drehschiebers (1) und dem Lagerteil (22) ein konstanter oder sich über dem Verdrehwinkel zwischen Drehschieber und Lagerteil (22) im Querschnitt beliebig verändernder Drosselspalt gebildet ist.

6. Lenkventil nach Anspruch 4 oder 5, dadurch gekennzeichnet, daß für den Druckmittelrücklauf in der Umfangswand des Lagerteiles (22) im Bereich der Rücklaufbohrung (24) eine Drosselbohrung (25) angeordnet ist.

7. Lenkventil nach Anspruch 1, dadurch gekennzeichnet, daß im Außenumfang des Stützteiles (20, 21) eine ringförmige Nut (20A, 21A) angeordnet ist

## Claims

1. Steering valve of rotary slide valve construction for vehicles having an input part made from a rotary slide (1) and linked to a steering column, the input part being connected rotatably between stops by a torsion bar (6) in the circumferential direction to an output part made from a control sleeve (2) connected to a pinion or a worm acting as a drive shaft (3), the torsion bar (6) having a central torsion zone (10) of reduced cross-section and being provided with connecting parts (11, 12) on both its ends to connect it to the input or output part, support parts (20, 21) being joined to the torsion zone (10), the respective connecting part (11, 12) being attached to the outer periphery of these support parts (20, 21), and the control sleeve (2) surrounding the rotary slide (1) and control edges and control grooves being arranged on the control sleeve (2) and the rotary slide (1) to distribute hydraulic fluid to assist steering power, characterised in that the connecting part (12) facing the output part forms a support bearing (22) for the rotary slide (1).

2. Steering valve according to claim 1, characterised in that the connecting part (12) projects inwards from the support part (21) with a bearing part (22) in the direction of the torsion zone (10), and in that the rotary slide (1) rests on the bearing part (22).

3. Steering valve according to claim 2, characterised in that the bearing part (22) in the form of a bush surrounds the torsion bar (6) at a distance.

4. Steering valve according to claim 3, characterised in that the bearing part (22) is extended inwards at least as far as the return bores (24) leading inwards at least approximately radially, and in that a throttle point (25) is formed between the return bore (24) on the inner circumference of the rotary slide (1) and the bearing part (22).

5. Steering valve according to claim 4, characterised in that a constant throttle gap or one which changes its cross-section at any time via the angle of rotation between rotary slide (1) and bearing part (22) is formed between the opening of the return bore (24) on the inner circumference of the rotary slide (1) and the bearing part (22).

6. Steering valve according to claim 4 or 5, characterised in that a throttle bore (25) is arranged for the return of the pressure medium in the circumferential wall of the bearing part (22) in the region of the return bore (24).

7. Steering valve according to claim 1, characterised in that a ring-shaped groove (20A, 21A) is arranged in the outer circumference of the support part (20, 21).

## Revendications

1. Soupape de direction du type à tiroir rotatif pour véhicules, comportant un élément d'entrée formé par un tiroir rotatif (1) raccordé à une colonne de direction, cet élément d'entrée étant relié, de manière à pouvoir tourner entre deux butées en direction circonférentielle grâce à une barre de torsion (6), à un élément de sortie formé par un manchon de commande (2) raccordé à un pignon ou à une vis sans fin servant d'arbre de sortie (3), dans laquelle la barre de torsion (6) comporte une zone centrale de torsion (10) à section transversale réduite et est munie d'éléments de liaison (11, 12) à ses deux extrémités pour être raccordée aux éléments d'entrée et de sortie, la zone de torsion (10) étant solidaire de têtes de montage (20, 21) sur le pourtour desquelles sont fixés les éléments de liaison respectifs (11, 12), et dans laquelle le manchon de commande (2) entoure le tiroir rotatif (1), des arêtes de commande et des rainures de commande étant disposées sur le manchon de commande (2) et sur le tiroir rotatif (1) pour distribuer un liquide hydraulique d'assistance de la direction, caractérisée en ce que l'élément de liaison (12) situé du côté de l'élément de sortie constitue un palier de support (22) pour le tiroir rotatif (1).

2. Soupape de direction selon la revendication 1, caractérisée en ce que l'élément de liaison (12) s'étend par un élément de palier (22) à partir de la tête de montage (21), du côté de l'intérieur en direction de la zone de torsion (10), et en ce que le tiroir rotatif (1) s'appuie sur cet élément de palier (22).

3. Soupape de direction selon la revendication 2, caractérisée en ce que l'élément de palier (22) forme une douille entourant à distance la barre de torsion (6).

4. Soupape de direction selon la revendication 3, caractérisée en ce que l'élément de palier (22) se prolonge intérieurement au moins jusqu'à des orifices de retour d'écoulement (24) conduisant au moins approximativement radialement vers l'intérieur, et en ce qu'un étranglement (25) est formé entre l'élément de palier (22) et l'orifice de retour (24) sur la surface intérieure du tiroir rotatif (1).

5. Soupape de direction selon la revendication 4, caractérisée en ce que, entre le débouché de l'orifice de retour (24) sur la surface intérieure du tiroir rotatif (1) et l'élément de palier (22), il existe une fente d'étranglement constante ou changeant de section à volonté en fonction de l'angle de rotation entre le tiroir rotatif (1) et l'élément de palier (22).

6. Soupape de direction selon la revendication 4 ou 5, caractérisée en ce qu'un orifice d'étranglement (25) pour le retour du liquide est ménagé dans la paroi périphérique de l'élément de palier (22) dans la zone de l'orifice de retour (24).

7. Soupape de direction, selon la revendication 1, caractérisée en ce qu'une rainure annulaire (20A, 21A) est ménagée sur le pourtour de la tête de montage (20, 21).